# EUROPEAN PATENT APPLICATION

(11) **EP 4 325 904 A1**
(43) Date of publication of application: **21.02.2024**
(21) Application number: 21937734.8
(22) Date of filing: 15.12.2021
(51) Int. Cl.: H04W 4/06

(54) **MULTICAST IMPLEMENTING METHOD, ROUTING DEVICE, AND STORAGE MEDIUM**

(30) Priority: 19.04.2021 CN 202110433487
(71) Applicant: ZTE Corporation, Shenzhen, Guangdong 518057 (CN)
(72) Inventor: XU, Benchong, Shenzhen, Guangdong 518057 (CN); ZHANG, Zheng, Shenzhen, Guangdong 518057 (CN)
(74) Representative: Zoli, Filippo
(86) International application number: PCT/CN2021/138453
(87) International publication number: WO 2022/222512

(57) **Abstract**

A multicast implementing method, a routing device, and a storage medium. The method comprises: a first routing device sends a first packet to at least one second routing device, wherein the first packet carries a plurality of first BIER sub-domain identifiers, and the first routing device supports a plurality of BIER sub-domains (S110); the first routing device receives a second packet returned by the second routing device, wherein the second packet carries at least one second BIER sub-domain identifier (S120); the first routing device establishes, according to the second BIER sub-domain identifier carried in the second packet, a transmission path for performing multicast data transmission with the second routing device (S130).

## Description

### CROSS-REFERENCE TO RELATED APPLICATION

This application is filed on the basis of the Chinese patent application No. 202110433487.2 filed April 19, 2021, and claims priority of the Chinese patent application, the entire contents of which are incorporated herein by reference.

### TECHNICAL FIELD

The present disclosure relates to the technical field of communication, and in particular to a method for multicast implementation, a routing device, and a storage medium.

### BACKGROUND

According to the multicast technology based on bit-indexed explicit replication (BIER), a set of destination nodes of a multicast packet are encapsulated within a header of the packet in the form of bit strings for transmission. Consequently, it is not necessary for an intermediate node in a network to establish a multicast tree and store the multicast flow status for each multicast flow (Per-flow). Instead, the intermediate node only has to copy and forward the flow according to the set of destination nodes in the header of the packet.

In a BIER domain, a BIER sub-domain is a basic unit. The standard and protocol of related art define that the route sent by each node can only be associated with one BIER sub-domain. Even if a node supports multiple BIER sub-domains, only one BIER sub-domain can be selected from the supported BIER sub-domains for association for multicast data transmission. However, multicast data is not enabled to be concurrently transmitted across multiple BIER sub-domains. As a result, it is not possible for a multicast source device to transmit multicast data across multiple BIER sub-domains.

### SUMMARY

The following is a summary of the subject matter described herein. This summary is not intended to limit the scope of protection of the claims.

Provided are a method for multicast implementation, a routing device, and a storage medium in some embodiments of the present disclosure.

An embodiment of the present disclosure provides a method for multicast implementation, which includes, transmitting, by a first routing device, a first message, to at least one second routing device, where the first message carries a plurality of bit indexed explicit replication (BIER) sub-domain identifier (ID), the first routing device supports a plurality of BIER sub-domains, and each of the first BIER sub-domain IDs is indicative of a BIER sub-domain supported by the first routing device; receiving, by the first routing device, a second message returned by the second routing device, where the second message carries at least one second BIER sub-domain ID each being indicative of a respective BIER sub-domain supported by the second routing device, and the second message is sent by the second routing device in response to a determination, by the second routing device that the second routing device has at least one commonly supported BIER sub-domain in common with the first routing device, according to the plurality of the first BIER sub-domain IDs carried within the first message; and establishing, by the first routing device, a transmission path for multicast data transmission with the second routing device, based on one of the at least one second BIER sub-domain ID carried by the second message.

An embodiment of the present disclosure provides another method for multicast implementation, which includes, receiving, by a second routing device, a first message sent by a first routing device, where the first message carries a plurality of bit indexed explicit replication (BIER) sub-domain identifier (ID), the first routing device supports a plurality of BIER sub-domains, and each of the first BIER sub-domain IDs is indicative of a respective BIER sub-domain supported by the first routing device; transmitting, by the second routing device, a second message, to the first routing device, in response to a determination by the second routing device that the second routing device has at least one supported BIER sub-domain in common with the first routing device; where the second message carries at least one second BIER sub-domain ID each being indicative of a respective BIER sub-domain supported by the second routing device; and establishing, by the first routing device, a transmission path for multicast data transmission between the second routing device and the first routing device, based on one of the at least one second BIER sub-domain ID carried by the second message.

An embodiment of the present disclosure provides a routing device, which includes a memory, a processor, and a computer program stored in the memory and executable by the processor which, when executed by the processor, causes the processor to carry out any one of the methods described above.

An embodiment of the present disclosure provides a computer-readable medium storing a computer program thereon which, when executed by a processor, causes the processor to carry out any one of the methods described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing a multicast virtual private network;
FIG. 2 depicts a flowchart showing a method for multicast implementation according to an embodiment of the present disclosure;
FIG. 3 depicts a schematic diagram showing the format of a membership query message and a membership report message;
FIG. 4 depicts a flowchart showing a method for multicast implementation according to another embodiment of the present disclosure;
FIG. 5 depicts a schematic diagram showing an MVPN networking scenario;
FIG. 6 depicts a schematic diagram showing another MVPN networking scenario; and
FIG. 7 depicts a schematic diagram of a routing device according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It shall be understood that, in the description of an embodiment of the present disclosure, terms "first" and "second" if described, are intended for distinguishing technical features, which shall not be understood as indicating or implying relative importance or implicitly indicating the number of the indicated technical features or the order of the indicated technical features. "At least one" means one or more, and "multiple" means two or more. Connection "and/or" describes the relationship of related objects, indicating that there can be three kinds of relationships. For example, A and/or B, which can indicate the situation that A alone, both A and B, or B alone. A and B can be singular or plural. The character "/"generally indicates that the context object is in "OR" relationship. "At least one of the following" and similar expressions refer to any combination of these items, including any combination of single or plural items. For example, at least one of A, B and C can indicate: A, B, C, both A and B, both A and C, both B and C, or A and B and C, where A, B and C can be single or plural.

In addition, the technical features involved in various embodiments of the present disclosure described below can be combined with each other as long as they do not conflict with each other.

Some related art is discussed prior to the illustration of the present disclosure.

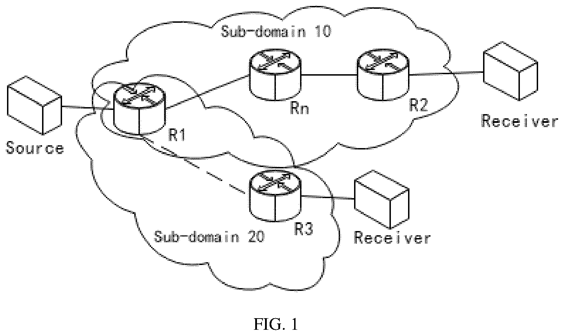

Please refer to FIG. 1, which depicts a scenario of a multicast virtual private network (MVPN). As shown in FIG. 1, R1, R2 and R3 are edge nodes, R1 is connected to a multicast source (Source), R2 and R3 are connected to a multicast receiver (Receiver), and Rn is an intermediate node.

In the BIER domain, a BIER sub-domain is a basic unit. The standard and protocol of related art define that each node can only be associated with one BIER sub-domain.

For example, R1 supports BIER sub-domain 10 and BIER sub-domain 20, R2 supports BIER sub-domain 10, and R3 supports BIER sub-domain 20. R1 cannot associate with both BIER sub-domain 10 and BIER sub-domain 20. That is, R1 is not enabled to concurrently transmit multicast data to R2 and R3. Thus, multicast data transmission across multi-BIER sub-domains is not possible.

In view of this, some embodiments of the present disclosure provide a method for multicast implementation, a routing device, and a storage medium, in order to at least alleviate the inability of the multicast data transmission by a multicast source device across multiple BIER sub-domains.

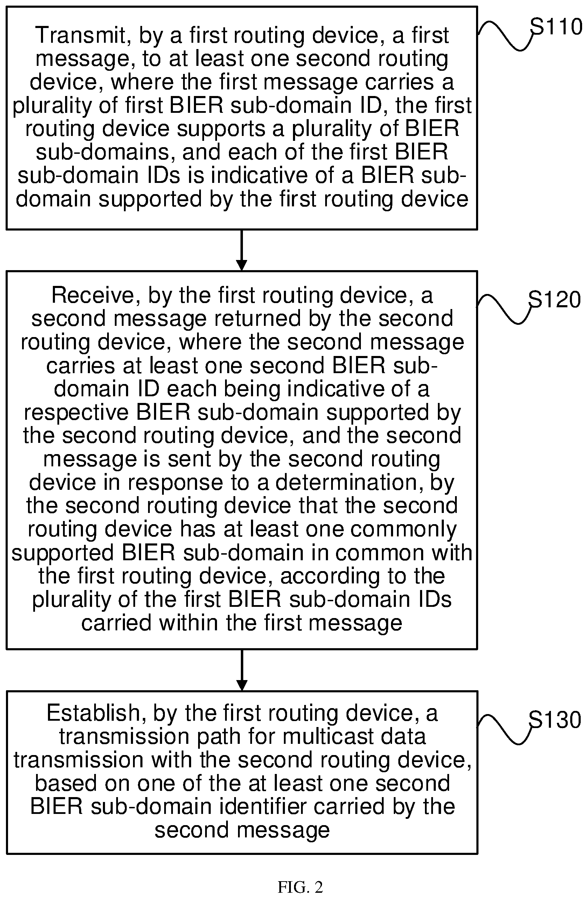

Please refer to FIG. 2, which depicts a method for multicast implementation according to an embodiment of the present disclosure. The method includes the following operations.

At S 110, a first routing device sends a first message to at least one second routing device, where the first message carries a plurality of first BIER sub-domain identifiers, the first routing device supports a plurality of BIER sub-domains, and the first BIER sub-domain identifiers are indicative of the BIER sub-domains supported by the first routing device.

The first routing device can be interpreted as an ingress PE node positioned at the multicast Source side within a BIER domain. The first routing device supports multiple BIER sub-domains, and each BIER sub-domain corresponds to a BIER sub-domain identifier. In an embodiment of the present disclosure, a BIER sub-domain identifier corresponding to the BIER sub-domain supported by the first routing device is taken as a first BIER sub-domain identifier. A plurality of first BIER sub-domain identifiers corresponding to the first routing device are encapsulated in a first message and sent to the second routing device.

The second routing device can be interpreted as an egress PE node positioned at the multicast Receiver side within a BIER domain. In an embodiment of the present disclosure, the first routing device is enabled to concurrently send a first message to one or more second routing devices. The plurality of second routing devices here may be egress PE nodes over different BIER sub-domains in case the first routing device concurrently sends a first message to a plurality of second routing devices.

In an example, during the establishment of an inclusive public multicast service interface (I-PMSI) tunnel of BIER, the first routing device of the root node sends an I-PMSI automatic discovery route (A-D route) to the second routing device of the leaf node. Generally, the I-PMSI A-D route carries the attribute of a PMSI tunnel. In an embodiment of the present disclosure, the first message is carried in the tunnel attribute of the I-PMSI A-D route.

In another example, during the establishment of the selective public multicast service interface (S-PMSI) tunnel of BIER, the first routing device of the root node sends an S-PMSI auto-discovery route (A-D route) to the second routing device of the leaf node. Generally, S-PMSI A-D route carries the attribute of the PMSI tunnel. In an embodiment of the present disclosure, the first message is carried in the tunnel attribute of the S-PMSI A-D route.

It can be understood that, in an embodiment of the present disclosure, the first message further carries at least one of,
the number of BIER sub-domains supported by the first routing device, where the number of BIER sub-domains supported by the first routing device corresponds to the number of first BIER sub-domain identifiers; or
a first Bit-Forwarding Router (BFR) identifier that corresponds to a first BIER sub-domain identifier; or
a first prefix type that corresponds to a first BIER sub-domain identifier; or
a first BFR prefix that corresponds to a first BIER sub-domain identifier.

At S 120, the first routing device receives a second message returned by the second routing device, where the second message carries at least one second BIER sub-domain identifier that is indicative of a BIER sub-domain supported by the second routing device, and the second message is sent by the second routing device in response to a determination, by the second routing device, that the second routing device supports at least one supported BIER sub-domain in common with the first routing device, according to a plurality of first BIER sub-domain identifiers carried within the first message.

In an implementation, after receiving the first message from the first routing device, the second routing device determines whether it supports at least one supported BIER sub-domain in common with the first routing device, according to the first BIER sub-domain identifiers carried within the first message. For example, the first routing device supports BIER sub-domain 10 and BIER sub-domain 20, and the second routing device supports BIER sub-domain 10. Therefore, both the second routing device and the first routing device support BIER sub-domain 10. The second routing device, upon determining that it has at least one supported BIER sub-domain in common with the first routing device, returns a second message to the first routing device.

When the first message is carried in the tunnel attribute of I-PMSI/S-PMSI A-D route, and the second routing device determines that it has at least one supported BIER sub-domain in common with the first routing device, according to the first BIER sub-domain identifiers carried in the tunnel attribute of I-PMSI/S-PMSI A-D route, the second routing device returns a leaf automatic discovery route (Leaf A-D route) to the first routing device. Generally, the Leaf A-D route carries the attribute of a PMSI tunnel. In this case, the second message can be carried in the tunnel attribute of the Leaf A-D route.

It can be understood that, in an embodiment of the present disclosure, the second message additionally carries at least one of,
the number of BIER sub-domains supported by the second routing device, and this number corresponds to the number of second BIER sub-domain identifiers; or
a second BFR identifier that corresponds to a second BIER sub-domain identifier; or
a second prefix type that corresponds to a second BIER sub-domain identifier; or
a second BFR prefix that corresponds to a second BIER sub-domain identifier.

It can be understood that the format of the tunnel attribute carried by the I-PMSI A-D route, S-PMSI A-D route, and Leaf A-D route can be identical, and the fields included in this tunnel attribute can be found in the following Table 1:

**Table 1**

| FIELD | DESCRIPTION |
|---|---|
| Flag | a flag that indicates the routing type |
| MPLS Lable | Multi-protocol label switching label |
| Tunnel Type | Type of Tunnel |
| Sub-domain-number | Number of BIER sub-domains supported |
| Sub-domain-ID-1 | Identifier of the first supported BIER sub-domain |
| BFR-ID-1 | BFR identifier configured in the corresponding first BIER sub-domain |
| Prefix-type-1 | The prefix type configured in the corresponding first BIER sub-domain, with a value of "1" indicating IPv4 and a value of "2" indicating IPv6 |
| BFR-prefix-1 | BFR prefix configured in the corresponding first BIER sub-domain, which has a length of 4 when the Prefix type is "1" and a length of 16 when the Prefix type is "2" |
| Sub-domain-ID-2 | Identifier of the second supported BIER sub-domain |
| BFR-ID-2 | BFR identifier configured in the corresponding second BIER sub-domain |
| Prefix-type-2 | Prefix type configured in the corresponding second BIER sub-domain |
| BFR-prefix-2 | BFR prefix configured in the corresponding second BIER sub-domain |
| 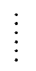 | 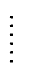 |
| Sub-domain-ID-n | Identifier of the n-th supported BIER sub-domain |
| BFR-ID-n | BFR identifier configured in the corresponding n-th BIER sub-domain |
| Prefix-type-n | Prefix type configured in the corresponding n-th BIER sub-domain |
| BFR-prefix-n | BFR prefix configured in the corresponding n-th BIER sub-domain |

At S130, the first routing device establishes a transmission path for multicast data transmission with the second routing device, according to a second BIER sub-domain identifier carried within the second message.

When receiving a second message returned by the second routing device, the first routing device obtains the second BIER sub-domain identifier indicative of the BIER sub-domain supported by the second routing device, from the second message, and then establishes a corresponding transmission path for multicast data transmission with the second routing device according to the second BIER sub-domain identifier.

It can be understood that for the I-PMSI A-D route or S-PMSI A-D route sent by the first routing device to the second routing device, the transmission path between the first routing device and the second routing device corresponds to an I-PMSI tunnel or an S-PMSI tunnel. After the second routing device successfully joins the tunnel, a leaf node is added, such that multicast data transmission can be achieved between the first routing device and the second routing device.

In an embodiment of the present disclosure, the first routing device supports multiple BIER sub-domains. When the first routing device sends a first message to multiple second routing devices concurrently, a second routing device that receives the first message can join the transmission path created by the first routing device as long as the second routing device has at least one supported BIER sub-domain in common with the first routing device. As a result, the first routing device is enabled to send multicast data to the second routing devices across various BIER sub-domains concurrently.

It can be understood that the method for multicast implementation according to an embodiment of the present disclosure further includes, establish a bidirectional forwarding detection (BFD) session through the I-PMSI tunnel only, by the first routing device and the second routing device, in response to an inclusion of both the I-PMSI tunnel and the S-PMSI tunnel in the established transmission path between the first routing device and the second routing device.

For example, R1 establishes a point-to-multipoint BFD session in BIER sub-domain 10 and BIER sub-domain 20, respectively. The BFD message is carried on the BIER tunnel with the destinations being R2 and R3. R2 and R3 listen to BFD messages to determine the connectivity of BIER tunnel. When R1 is triggered by multicast traffic to switch to the S-PMSI tunnel for multicast data transmission, since the destination node set of the S-PMSI is a subset of the destination node set of the I-PMSI, it is not necessary to establish a point-to-multipoint BFD session in each S-PMSI tunnel. Instead, it is possible to detect the status of the BIER tunnel by means of the BFD session established by the I-PMSI tunnel merely, thus saving BFD resources.

It should be understood that the method for multicast implementation according to an embodiment of present disclosure is further applicable to multicast transmission under MLD/IGMP protocol. When MLD/IGMP protocol is adopted, the first message can be a membership query message, and the first BIER sub-domain identifier can be carried in the membership query message. When the first message is a membership query message, correspondingly, the second message is a membership report message, and the second BIER sub-domain identifier is carried in the membership report message.

In an example, in the MLD/IGMP protocol, a routing device determines whether a host that has joined a multicast group is present in a BIER sub-domain by means of the query-response method. If such a host presents, the routing device will perform the operation of forwarding multicast packets to the BIER sub-domain. If such a host does not present, this routing device does not have to forward multicast packets to this BIER sub-domain.

In an implementation, the first routing device periodically send a membership query message to all the second routing devices over the BIER sub-domains supported by the first routing device. The membership query message carries the first BIER sub-domain identifiers corresponding to a plurality of BIER sub-domains supported by the first routing device. A second routing device who is intended to join a multicast group, after receiving the membership query message, first determines whether it has at least one commonly supported BIER sub-domain in common with the first routing device. If a commonly supported BIER sub-domain presents, the second routing device responds to the query message from the first routing device, and sends to the first routing device, a multicast membership report message that carries the address of the multicast group to be joined and the second BIER sub-domain identifier corresponding to the BIER sub-domain supported by the second routing device. After receiving the membership report message from the second routing device, the first routing device learns that the second routing device is intended to join the multicast group, and the multicast group address and the corresponding BIER sub-domain can be obtained from the message. Subsequently, the first routing device establishes a corresponding transmission path with the second routing device based on the employed routing protocol.

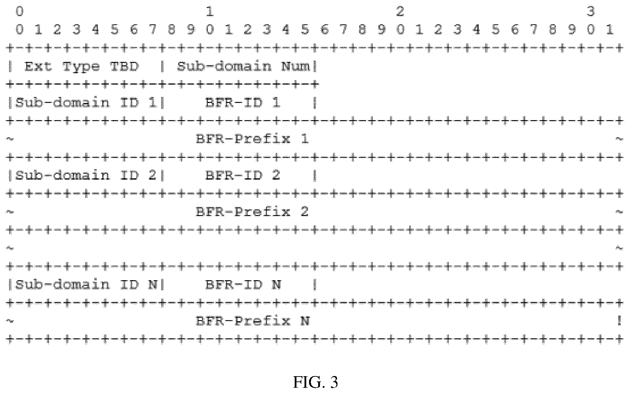

It can be understood that the format of the membership query message and the membership report message is identical, both of which include, Sub-domain Num, Sub-domain ID, BFR-ID and BFR-Prefix fields, where Sub-domain ID, BFR-ID and BFR-Prefix correspond to BIER sub-domains supported by the routing devices, as shown in FIG. 3.

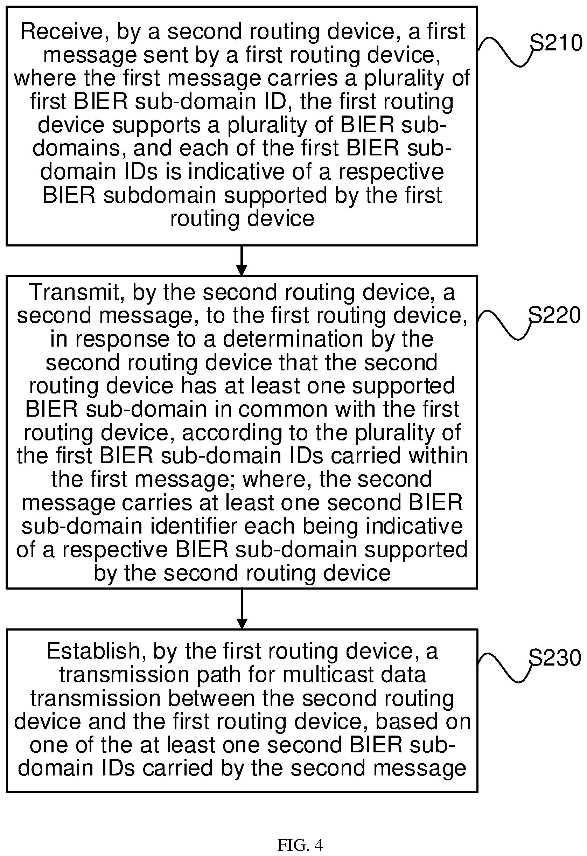

Referring to FIG. 4, which depicts a method for multicast implementation according to another embodiment of the present disclosure. The method includes the following operations.

At S210, a second routing device receives a first message sent by a first routing device, where the first message carries a plurality of first BIER sub-domain identifiers, the first routing device supports a plurality of BIER sub-domains, and the first BIER sub-domain identifiers are indicative of the BIER sub-domains supported by the first routing device.

It can be understood that, in an embodiment of the present disclosure, the first message is carried in the tunnel attribute of the I-PMSI A-D route or S-PMSI A-D route.

It can be understood that, in an embodiment of the present disclosure, the first message further carries at least one of,
the number of BIER sub-domains supported by the first routing device, where the number of BIER sub-domains supported by the first routing device corresponds to the number of first BIER sub-domain identifiers; or
a first BFR identifier that corresponds to a first BIER sub-domain identifier; or
a first prefix type that corresponds to a first BIER sub-domain identifier; or
a first BFR prefix that corresponds to a first BIER sub-domain identifier.

At S220, the second routing device sends a second message that carries at least one second BIER sub-domain identifier that is indicative of a BIER sub-domain supported by the second routing device, in response to a determination by the second routing device that the second routing device supports at least one supported BIER sub-domain in common with the first routing device.

In an implementation, after receiving the first message from the first routing device, the second routing device determines whether it supports at least one supported BIER sub-domain in common with the first routing device, according to the first BIER sub-domain identifiers carried within the first message. For example, the first routing device supports BIER sub-domain 10 and BIER sub-domain 20, and the second routing device supports BIER sub-domain 10. Therefore, both the second routing device and the first routing device support BIER sub-domain 10. The second routing device, upon determining that it supports at least one BIER sub-domain in common with the first routing device, returns a second message to the first routing device.

When the first message is carried in the tunnel attribute of I-PMSI/S-PMSI A-D route, and the second routing device determines that it supports at least one BIER sub-domain in common with the first routing device, according to the first BIER sub-domain identifiers carried in the tunnel attribute of I-PMSI/S-PMSI A-D route, the second routing device returns a leaf automatic discovery route (Leaf A-D route) to the first routing device. Generally, the Leaf A-D route carries the attribute of a PMSI tunnel. In this case, the second message can be carried in the tunnel attribute of the Leaf A-D route.

It can be understood that, in an embodiment of the present disclosure, the second message additionally carries at least one of,
the number of BIER sub-domains supported by the second routing device, and this number corresponds to the number of second BIER sub-domain identifiers; or
a second BFR identifier that corresponds to a second BIER sub-domain identifier; or
a second prefix type that corresponds to a second BIER sub-domain identifier; or
a second BFR prefix that corresponds to a second BIER sub-domain identifier.

It can be understood that the format of the tunnel attribute carried by the I-PMSI A-D route, S-PMSI A-D route, and Leaf A-D route are identical, and the fields included in this tunnel attribute can be found in Table 1 above, which will not be repeated here.

At S230, a transmission path for multicast data transmission is established between the second routing device and the first routing device, and the transmission path is established by the first routing device according to a second BIER sub-domain identifier carried by the second message.

After receiving a second message returned by the second routing device, the first routing device obtains the second BIER sub-domain identifier indicative of the BIER sub-domain supported by the second routing device, from the second message, and then establishes a corresponding transmission path for multicast data transmission with the second routing device according to the second BIER sub-domain identifier.

It can be understood that for the I-PMSI A-D route or S-PMSI A-D route sent by the first routing device to the second routing device, the transmission path between the first routing device and the second routing device corresponds to an I-PMSI tunnel or an S-PMSI tunnel. After the second routing device successfully joins the tunnel, a leaf node is added, such that multicast data transmission can be achieved between the first routing device and the second routing device.

It can be understood that the method for multicast implementation according to an embodiment of the present disclosure further includes, establishing a plurality of transmission paths between the second routing device and the first routing device, in response to a determination that the second routing device supports a plurality of BIER sub-domains and the second routing device has a plurality of supported sub-domains in common with the first routing device, where each of the plurality of transmission path corresponds to a respective one of the plurality of supported sub-domains in common.

In an example, both R1 and R2 support BIER sub-domain 10 and BIER sub-domain 20, then the I-PMSI tunnels established between R1 and R2 include I-PMSI#1 corresponding to BIER sub-domain 10 and I-PMSI#2 corresponding to BIER sub-domain 20. When R1 at the multicast source side receives the multicast data having the destination nodes including R2, R1 transmits the multicast data to R2 through I-PMSI#1 and I-PMSI#2, thus importing the multicast data into various BIER sub-domains, and forming a protection relationship between various BIER sub-domains.

It can be understood that the method for multicast implementation according to an embodiment of the present disclosure further includes, the second routing device determines a main BIER sub-domain and a standby BIER sub-domain from a plurality of supported BIER sub-domains in common with the first routing device; receives multicast data transmitted via a transmission path corresponding to the main BIER sub-domain; and determines a new main BIER sub-domain from the standby BIER sub-domain(s) in response to a failure in the transmission path corresponding to the main BIER sub-domain.

In an example, R2 sets the BIER sub-domain 10 as the main BIER sub-domain and sets the BIER sub-domain 20 as the standby BIER sub-domain. When R1 transmits multicast data to R2 through I-PMSI#1 corresponding to BIER sub-domain 10 and I-PMSI#2 corresponding to BIER sub-domain 20, R2 only receives the multicast data transmitted by I-PMSI#1 and discards the multicast data transmitted by I-PMSI#2. However, when the BIER sub-domain 10 is abnormal, for example, R2 detects that the multicast data from R1 is abnormal (or the BFD status is down), R2 initiates main to standby switching, switches the main BIER sub-domain from BIER sub-domain 10 to BIER sub-domain 20, and receives the multicast data sent by R1 from I-PMSI#2, thus achieving the purpose of fast switching to reduce network packet loss.

It should be understood that the method for multicast implementation according to an embodiment of the present disclosure is further applicable to multicast transmission under MLD/IGMP protocol. When the MLD/IGMP protocol is adopted, the first message can be a membership query message, and the first BIER sub-domain identifier can be carried in the membership query message. When the first message is a membership query message, correspondingly, the second message is a membership report message, and the second BIER sub-domain identifier is carried in the membership report message.

It can be understood that the format of the membership query message and the membership report message is identical, both of which include, Sub-domain Num, Sub-domain ID, BFR-ID and BFR-Prefix fields, where Sub-domain ID, BFR-ID and BFR-Prefix correspond to BIER sub-domains supported by the routing devices.

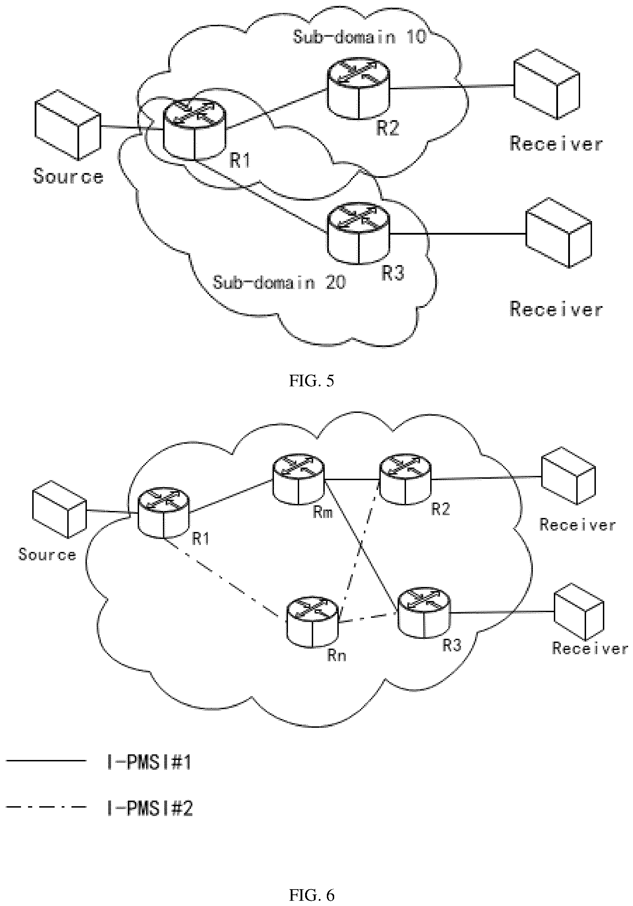

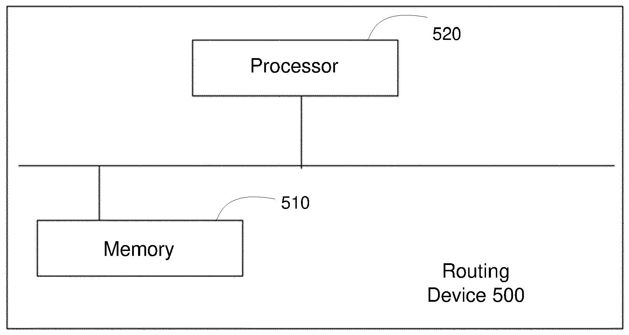

For a better understanding of those having ordinary skills in the art, a procedure in which the method for multicast implementation according to an embodiment of the present disclosure is illustrated in conjunction with the MVPN networking scenario shown in FIG. 5 by way of example.

Assume that R1 supports BIER sub-domain 10 and BIER sub-domain 20, R2 supports BIER sub-domain 10 and R3 supports BIER sub-domain 20. After R1 receives multicast data from a multicast source, the transmission of multicast data to R2 of BIER sub-domain 10 and R3 of BIER sub-domain 20 is as follows.

At S310, R1 sends an I-PMSI A-D route which carries a tunnel attribute, to R2 and R3, the tunnel attribute contains several fields related to the BIER sub-domain supported by R1, such as Sub-domain Num, Sub-domain ID, BFR-ID, Prefix Type and BFR-Prefix. Please refer to Table 2 below for details.

**Table 2**

| FIELD | VALUE |
|---|---|
| Sub-domain-number | 2 |
| Sub-domain-ID-1 | 10 |
| BFR-ID-1 | 1 |
| Prefix-type-1 | 1 |
| BFR-prefix-1 | 100.0.0.1 |
| Sub-domain-ID-2 | 20 |
| BFR-ID-2 | 1 |
| Prefix-type-2 | 2 |
| BFR-prefix-2 | 100::1 |

At S311a, after receiving the I-PMSI A-D route sent by R1, R2 determines that BIER sub-domain 10 is a commonly supported BIER sub-domain by both R1 and R2 according to the Sub-domain-ID-1 field in the tunnel attribute carried by the I-PMSI A-D route, then R2 returns the Leaf A-D route that carries the tunnel attribute to R1, the tunnel attribute contains fields related to the BIER sub-domains supported by R2, such as Sub-domain Num, Sub-domain ID, BFR-ID, Prefix Type and BFR-Prefix. Table 3 below shows the details.

**Table 3**

| FIELD | VALUE |
|---|---|
| Sub-domain-number | 1 |
| Sub-domain-ID-1 | 10 |
| BFR-ID-1 | 2 |
| Prefix-type-1 | 1 |
| BFR-prefix-1 | 100.0.0.2 |

At S311b, after receiving the I-PMSI A-D route sent by R1, R3 determines that BIER sub-domain 20 is a commonly supported BIER sub-domain by both R1 and R3 according to the Sub-domain-ID-2 field in the tunnel attribute carried by the I-PMSI A-D route, then R3 returns the Leaf A-D route that carries the tunnel attribute to R1, the tunnel attribute contains fields related to the BIER sub-domains supported by R3, such as Sub-domain Num, Sub-domain ID, BFR-ID, Prefix Type and BFR-Prefix. Table 4 below shows the details.

**Table 4**

| FIELD | VALUE |
|---|---|
| Sub-domain-number | 1 |
| Sub-domain-ID-1 | 20 |
| BFR-ID-1 | 3 |
| Prefix-type-1 | 2 |
| BFR-prefix-1 | 100::3 |

At S312a, after receiving the Leaf A-D route returned by R2, R1 establishes an I-PMSI#1 tunnel to R2 in BIER sub-domain 10 according to the tunnel attribute carried by the Leaf A-D route returned by R2, and performs multicast data transmission through the I-PMSI#1 tunnel.

At S312b, after receiving the Leaf A-D route returned by R3, R1 establishes an I-PMSI#2 tunnel to R3 in BIER sub-domain 20 according to the tunnel attribute carried by the Leaf A-D route returned by R3, and performs multicast data transmission through the I-PMSI#2 tunnel.

At S313, R1 initiates switching when the traffic of multicast data satisfies the condition of switching from the I-PMSI tunnel to S-PMSI, and sends S-PMSI A-D route to R2 and R3. The S-PMSI A-D route carries tunnel attributes, and the tunnel attributes include fields related to the BIER sub-domains supported by R1. Please refer to Table 2 above for details.

At S314a, after receiving the S-PMSI A-D route sent by R1, R2 determines that BIER sub-domain 10 is a commonly supported BIER sub-domain by both R1 and R2 according to the Sub-domain-ID-1 field in the tunnel attribute carried by the S-PMSI A-D route, then R2 returns the Leaf A-D route that carries the tunnel attribute to R1, the tunnel attribute contains fields related to the BIER sub-domains supported by R2, such as Sub-domain Num, Sub-domain ID, BFR-ID, Prefix Type and BFR-Prefix. Please refer to Table 3 above for details.

At S314b, after receiving the S-PMSI A-D route sent by R1, R3 determines that BIER sub-domain 20 is a commonly supported BIER sub-domain by both R1 and R3 according to the Sub-domain-ID-2 field in the tunnel attribute carried by the S-PMSI A-D route, then R3 returns the Leaf A-D route that carries the tunnel attribute to R1, the tunnel attribute contains fields related to the BIER sub-domains supported by R3, such as Sub-domain Num, Sub-domain ID, BFR-ID, Prefix Type and BFR-Prefix. Please refer to Table 4 above for details.

At S315a, after receiving the Leaf A-D route returned by R2, R1 establishes an S-PMSI#1 tunnel to R2 in BIER sub-domain 10 according to the tunnel attribute carried by the Leaf A-D route returned by R2, and switches to the S-PMSI#1 tunnel for multicast data transmission.

At S315b, after receiving the Leaf A-D route returned by R3, R1 establishes an S-PMSI#2 tunnel to R3 in BIER sub-domain 20 according to the tunnel attribute carried by the Leaf A-D route returned by R3, and switches to the S-PMSI#2 tunnel for multicast data transmission.

At S316, R1 establishes a BFD session with R2 and R3 through tunnels I-PMSI#1 and I-PMSI#2, and R2 and R3 listen to BFD messages, so as to determine the connectivity of BIER tunnels; since the destination node set of S-PMSI is a subset of the destination node set of I-PMSI, it is not necessary to establish a point-to-multipoint BFD session in each S-PMSI tunnel. Instead, it is possible to detect the status of the BIER tunnels by means of the BFD session established by the I-PMSI tunnel merely, thus saving BFD resources.

In the following, a procedure in which the method for multicast implementation according to an embodiment of the present disclosure is further illustrated in conjunction with the MVPN networking scenario shown in FIG. 6 by way of example.

Assuming that the edge nodes R1, R2 and R3 all support BIER sub-domain 10 and BIER sub-domain 20, an intermediate node Rm supports BIER sub-domain 10 and Rn supports BIER sub-domain 20. After R1 receives the multicast data from the multicast source, the process of transmitting the multicast data to R2 and R3 is as follows.

At S410, I-PMSI#1 corresponding to BIER sub-domain 10 and I-PMSI # 2 corresponding to BIER sub-domain 20 are established between R1 and R2.

At S420, R2 sets the BIER sub-domain 10 as the main BIER sub-domain and sets the BIER sub-domain 20 as the standby BIER sub-domain.

At S430, when R1 transmits multicast data to R2 through I-PMSI#1 corresponding to BIER sub-domain 10 and I-PMSI#2 corresponding to BIER sub-domain 20, R2 only receives the multicast data transmitted via I-PMSI#1 and discards the multicast data transmitted via I-PMSI#2.

At S440, when BIER sub-domain 10 is abnormal, R2 initiates the main-standby BIER sub-domain switching, switches the main BIER sub-domain from BIER sub-domain 10 to BIER sub-domain 20, and receives the multicast data sent by R1 via I-PMSI#2, so as to achieve fast switching to reduce network packet loss.

The procedure for R3 to receive multicast data from R1 is identical to those for R2, which thus will not be described here.

Referring to FIG. 7, which depicts a routing device 500 according to an embodiment of the present disclosure. The device includes a memory 510, a processor 520 and a computer program stored in the memory 510 and executable by the processor 520.

The processor 520 and the memory 510 may be connected by a bus or other means.

As a non-transitory computer-readable storage medium, the memory 510 can be configured to store non-transitory software programs and non-transitory computer-executable programs. In addition, the memory 510 can include high-speed random-access memory and non-transitory memory, such as at least one disk memory device, flash memory device, or other non-transitory solid-state memory devices. In some implementations, the memory may include memories remotely located relative to the processor 520, and these remote memories may be connected to the processor 520 through a network. Examples of the above networks include, but are not limited to, the Internet, intranet, local area network, mobile communication network, and combinations thereof.

Non-transitory software programs and instructions for the method in any one of the above embodiments are stored in memory 510 which, when executed by processor 520, causes the processor to carry out any one of the methods described above.

An embodiment of the present disclosure further provides a computer-readable storage medium, which stores a computer program executable by a processor or controller which, when executed by the processor or controller, causes the processor or controller to carry out the method described in any one of the above embodiments.

According to a scheme of an embodiment of the present disclosure, a method is provided, which includes, transmitting, by a first routing device, a first message, to at least one second routing device, where the first message carries a plurality of first bit indexed explicit replication (BIER) sub-domain identifier (ID), the first routing device supports a plurality of BIER sub-domains, and each of the first BIER sub-domain IDs is indicative of a BIER sub-domain supported by the first routing device; receiving, by the first routing device, a second message returned by the second routing device, where the second message carries at least one second BIER sub-domain ID each being indicative of a respective BIER sub-domain supported by the second routing device, and the second message is sent by the second routing device in response to a determination, by the second routing device that the second routing device has at least one commonly supported BIER sub-domain in common with the first routing device, according to the plurality of the first BIER sub-domain IDs carried within the first message; and establishing, by the first routing device, a transmission path for multicast data transmission with the second routing device, based on one of the at least one second BIER sub-domain ID carried by the second message. In this way, the first routing device at the multicast source side is no longer limited to transmitting multicast data in one BIER sub-domain, and the first routing device is enabled to transmit multicast data across BIER sub-domains supported by itself. A second routing device at the multicast receiver side can establish a transmission path for multicast with the first routing device as long as the second routing device has at least one commonly supported BIER sub-domain in common with the first routing device.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for multicast implementation comprising,
transmitting, by a first routing device, a first message, to at least one second routing device, wherein the first message carries a plurality of first bit indexed explicit replication (BIER) sub-domain identifiers (IDs), the first routing device supports a plurality of BIER sub-domains, and each of the first BIER sub-domain IDs is indicative of a respective BIER sub-domain supported by the first routing device;
receiving, by the first routing device, a second message returned by the second routing device, wherein the second message carries at least one second BIER sub-domain ID each being indicative of a respective BIER sub-domain supported by the second routing device, and the second message is sent by the second routing device in response to a determination, by the second routing device that the second routing device has at least one commonly supported BIER sub-domain in common with the first routing device, according to the plurality of the first BIER sub-domain IDs carried within the first message; and
establishing, by the first routing device, a transmission path for multicast data transmission with the second routing device, based on one of the at least one second BIER sub-domain ID carried by the second message.

2. The method as claimed in claim 1, wherein the first message is carried in a tunnel attribute of one of, an inclusive public multicast service interface (I-PMSI) auto-discovery route (I-PMSI A-D route), or a selective public multicast service interface (S-PMSI) auto-discovery route (S-PMSI A-D route); and
the second message is carried in a tunnel attribute of a leaf auto-discovery route (Leaf A-D route).

3. The method as claimed in claim 1, wherein the first message further carries at least one of,
a number of BIER sub-domains supported by the first routing device, and the number of BIER sub-domains supported by the first routing device corresponds to the number of first BIER sub-domain IDs;
a plurality of first bit-forwarding router (BFR) IDs each corresponding to a respective one of the first BIER sub-domain IDs;
a plurality of first prefix types each corresponding to a respective one of the first BIER sub-domain IDs; or
a plurality of first BFR prefixes each corresponding to a respective one of the first BIER sub-domain IDs.

4. The method as claimed in claim 1, wherein the second message further carries at least one of,
a number of BIER sub-domains supported by the second routing device, and the number of BIER sub-domains supported by the second routing device corresponds to the number of second BIER sub-domain IDs;
a plurality of second bit-forwarding router, BFR, identifiers each corresponding to a respective one of the second BIER sub-domain IDs;
a plurality of second prefix types each corresponding to a respective one of the second BIER sub-domain IDs; or
a plurality of second BFR prefixes each corresponding to a respective one of the second BIER sub-domain IDs.

5. The method as claimed in claim 1, further comprising,
establishing, in response to an inclusion of both an I-PMSI tunnel and an S-PMSI tunnel in the established transmission path between the first routing device and the second routing device, a bidirectional forwarding detection (BFD) session through the I-PMSI tunnel only, by the first routing device and the second routing device.

6. The method as claimed in claim 1, wherein the first message is a membership query message, and the first BIER sub-domain IDs are carried in the membership query message; and
the second message is a membership report message, and the second BIER sub-domain IDs are carried in the membership report message.

7. A method for multicast implementation, comprising,
receiving, by a second routing device, a first message sent by a first routing device, wherein the first message carries a plurality of first bit indexed explicit replication (BIER) sub-domain identifiers (IDs), the first routing device supports a plurality of BIER sub-domains, and each of the first BIER sub-domain IDs is indicative of a respective BIER sub-domain supported by the first routing device;
transmitting, by the second routing device, a second message, to the first routing device, in response to a determination by the second routing device that the second routing device has at least one commonly supported BIER sub-domain in common with the first routing device, according to the plurality of the first BIER sub-domain IDs carried within the first message; wherein, the second message carries at least one second BIER sub-domain ID each being indicative of a respective BIER sub-domain supported by the second routing device; and
establishing, by the first routing device, a transmission path for multicast data transmission between the second routing device and the first routing device, based on one of the at least one second BIER sub-domain ID carried by the second message.

8. The method of claim 7, further comprising,
establishing a plurality of transmission paths between the second routing device and the first routing device, in response to a determination that the second routing device supports a plurality of BIER sub-domains and the second routing device has a plurality of commonly supported BIER sub-domains in common with the first routing device, wherein each of the plurality of transmission paths corresponds to a respective one of the plurality of commonly supported BIER sub-domains.

9. The method of claim 8, further comprising,
determining, by the second routing device, a main BIER sub-domain and at least one standby BIER sub-domain from the plurality of commonly supported BIER sub-domains;
receiving multicast data transmitted from a transmission path corresponding to the main BIER sub-domain; and
determining a new main BIER sub-domain from the at least one standby BIER sub-domain, in response to a presence of a failure in the transmission path corresponding to the main BIER sub-domain.

10. The method as claimed in claim 7, wherein the first message is carried in a tunnel attribute of one of, an inclusive public multicast service interface (I-PMSI) auto-discovery route (I-PMSI A-D route), or a selective public multicast service interface (S-PMSI) auto-discovery route (S-PMSI A-D route); and
the second message is carried in a tunnel attribute of a leaf auto-discovery route (Leaf A-D route).

11. The method as claimed in claim 7, wherein the first message further carries at least one of,
a number of BIER sub-domains supported by the first routing device, and the number of BIER sub-domains supported by the first routing device corresponds to the number of first BIER sub-domain IDs;
a plurality of first bit-forwarding router (BFR) IDs each corresponding to a respective one of the first BIER sub-domain IDs;
a plurality of first prefix types each corresponding to a respective one of the first BIER sub-domain IDs; or
a plurality of first BFR prefixes each corresponding to a respective one of the first BIER sub-domain IDs.

12. The method as claimed in claim 7, wherein the second message further carries at least one of,
a number of BIER sub-domains supported by the second routing device, and the number of BIER sub-domains supported by the second routing device corresponds to the number of second BIER sub-domain IDs;
a plurality of second BFR IDs each corresponding to a respective one of the second BIER sub-domain IDs;
a plurality of second prefix types each corresponding to a respective one of the second BIER sub-domain IDs; or
a plurality of second BFR prefixes each corresponding to a respective one of the second BIER sub-domain IDs.

13. The method as claimed in claim 7, wherein the first message is a membership query message, and the first BIER sub-domain IDs are carried in the membership query message; or
the second message is a membership report message, and the second BIER sub-domain IDs are carried in the membership report message.

14. A routing device, comprising a memory, a processor and a computer program stored in the memory and executable by the processor which, when executed by the processor , causes the processor to carry out the method as claimed in any one of claims 1 to 6, or the method as claimed in any one of claims 7 to 13.

15. A computer-readable storage medium storing thereon a computer-executable instruction which, when executed by a processor, causes the processor to carry out the method as claimed in any one of claims 1 to 6, or the method as claimed in any one of claims 7 to 13.
